# EUROPEAN PATENT APPLICATION

(11) **EP 4 552 719 A1**
(43) Date of publication of application: **14.05.2025**
(21) Application number: 23383144.5
(22) Date of filing: 08.11.2023
(51) Int. Cl.: B01D 29/15, B01D 29/86, B01D 29/90

(54) **WASHING MACHINE EFFLUENT FILTRATION WITH AN AGITATOR ROTATING AROUND A FILTER ELEMENT**

(71) Applicant: MANN+HUMMEL LIFE SCIENCES & ENVIRONMENT HOLDING SINGAPORE PTE. LTD., Singapore 139234 (SG)
(72) Inventor: LORENTE, Sonia, 50006 ZARAGOZA (ES); DEL RIO, Laura, 50460 LONGARES (ES); ESTEBAN, Ignacio, 50018 ZARAGOZA (ES); GRACIA, Jaime, 50018 ZARAGOZA (ES); BIELSA, Raúl, 50190 ZARAGOZA (ES); MARZAL, Leopoldo, 50019 ZARAGOZA (ES)
(74) Representative: Mann + Hummel Intellectual Property

(57) **Abstract**

The invention refers to a rotor assisted filter for filtering effluent of a washing machine. Rotation of the rotor supports centrifugal separation of especially heavier particles and fibres. A filter element engages into the rotor, in particular between axially extending blades of the rotor. The filter element may separate microplastics from the effluent. A receptacle surrounds the filter element. Fibres, particles and microplastics are collected in the receptacle. For cleaning, the filter element and the receptacle can be removed from a filter housing. Preferably, the receptacle is detachable from the filter element. Sliding the receptacle along the filter element may wipe debris from the filter element.

## Description

### Technical field

The present invention refers to a filter assembly comprising
- a housing;
- a filter element;
- a rotor, rotatably mounted inside the housing and comprising at least one blade.

### Background

Such a filter assembly is known from the article "Filtersysteme für den Einsatz in anspruchsvollen Anwendungen - Auf den Prozess abgestimmt", published online at https-//prozesstechnik.industrie.de/chemie/schuettguttechnik-chemie/auf-denprozess-abgestimmt/ on 07.06.2022, last accessed on 29.09.2023.

When clothing is being washed, fibers and debris are released. Since clothing is often made with synthetic fibers, a certain amount of microplastics is generated during each washing cycle. Nowadays, microplastics emission is frequently considered as a severe ecological problem.

If the fibers and microplastics shall not be released into the environment, they need to be held back in order to be suitably disposed of. To this end, the use of filters is generally known, for instance from WO 2021/070102 A1.

The article cited at the outset describes a filter element for filtration of process fluids from industrial plants, wherein dynamic scrapers move around the filter element, which additionally rotate the liquid to be filtered. Due to the centrifugal forces, the dirt particles are transported from the filter element towards a housing wall and continuously discharged downwards. The hydrodynamic scrapers also generate negative pressure forces and thus unstable flow conditions at the surface of the filter element. This enhances the filtration effect. Both effects together prevent the formation of filter cakes on the filter surface.

WO 2021/070102 A1 discloses a filter assembly comprising an inertial separator as a first filter stage for removing the largest and heaviest particles. The inertial separator is formed of a tangential inlet and cylindrical inside walls of a vessel which cause the incoming effluent to rotate, throwing larger debris to the outside of the vessel under centrifugal force where the debris sinks to the bottom of the vessel. A second filter stage of the filter assembly comprises a cylindrical coarse mesh.

It is an object of the invention to provide an efficient and easy to clean filter for effluent of washing machines.

This is achieved by a filter assembly according to claim 1, the use of a filter assembly according to claim 14 and a washing machine according to claim 15. Advantageous embodiments are given in the subclaims and the description.

### Disclosure of the invention

In accordance with the invention, a filter assembly, for filtering effluent of a washing machine is provided. The effluent may also be referred to as wastewater. The effluent generally comprises dirt, having been washed out from clothing and the like, and material of the clothing, in particular fibers and debris, which may contain microplastics.

The filter assembly comprises a housing. An inlet, for the effluent from a drum of the washing machine, is typically arranged at an upper end of the housing. An outlet for filtered wastewater, i.e. wastewater containing less fibers and particles than the effluent from the drum, is typically arranged at a lower end of the housing.

The filter assembly further comprises a filter element, having a cylindrical filter medium body. Preferably, the filter medium body is a filter mesh. A maximum pore size of the filter medium body may be 150 µm, or 100, preferably 50, particularly preferably 20 µm. The filter element prevents particles such as microplastics from advancing to the outlet. During use, water passes through the filter medium body towards the radial inside.

A rotor of the filter assembly is rotatably mounted inside the housing. The rotor may also be referred to as an agitator. The rotor comprises at least one blade extending along the filter element. The blade may run parallel or inclined with respect to an axis of rotation of the rotor. Typically, the rotor comprises at least 2 blades. The rotor may comprise in particular 4 or 5 blades. The blades may all have the same cross-sectional shape. Alternatively, at least one of the blades may have a cross-sectional shape, which differs from the cross-sectional shape of at least one other blade.

During use of the filter assembly, the rotor rotates around the filter medium body. The rotation of the rotor causes the effluent to rotate inside the housing. Due to centrifugal forces, part of the particles travel to a circumferential wall of the housing. These particles generally sink downwards along the circumferential housing wall. The rotating blades may further create pressure waves and/or locally alternating flow directions, in particular towards the radial inside or outside. This contributes to permanently clean the filter medium body and to prevent it from clogging.

The axis of rotation of the rotor generally coincides with the axis of the filter medium body. Indications of directions such as radial, axial or circumferential generally refer to the axis of rotation, in particular the common axis. During use, the axis of rotation, in particular the common axis, is oriented approximately vertically, for instance with a maximum inclination towards a vertical axis of at most 20°, preferably at most 10°.

According to the invention, the filter assembly comprises a receptacle, which is located at a bottom end of said filter element. The receptacle serves to collect particles, which have been separated from the effluent water via centrifugal forces and by the filter element.

Preferably, the receptacle engages around the filter element. The receptacle may be cup-shaped and comprise an outer wall and a lower face. The receptacle is advantageously rotationally symmetric with respect to the axis of the filter element. The receptacle is typically arranged above the outlet of the housing.

Further according to the invention, the filter element and the receptacle are detachably arranged inside the housing. This allows the filter element and the receptacle to be removed from the housing for cleaning. With the filter element and the receptacle separated from the housing, an accumulation of dirt containing microplastics and the like can be wiped out of the receptacle in order to be suitably disposed. After cleaning, the filter element and the receptacle are reinstalled in the housing for further use of the filter assembly.

Besides the inlet and the outlet, the housing is generally closed during use of the filter assembly. In particular, no dirt outlet is provided at the housing. Rather, the particles, fibers and the like are collected in the receptacle and are disposed during maintenance, as described beforehand.

The filter element may comprise a support body, around which the filter medium body engages. The support body provides stability to the filter medium body. Preferably, the support body comprises longitudinal and circumferential ribs. This design keeps a large area of the filter medium body open for filtration while providing sufficient stability.

The support may body comprise an end plate, which seals the housing in the assembled state. This design reduces the number of parts to be handled during maintenance. In particular, no separate cover for the housing needs to be provided, since the end plate of the support body serves to close an insertion opening of the housing. Preferably, the end plate and the housing comprise mating threads. This facilitates assembly and disassembly, while assuring a secure connection. A seal element, such as an O-ring, may be arranged between the housing and the end plate. Thereby, the risk of leakage is further reduced.

The support body may have a shoulder for sealing abutment of the receptacle, preferably of a lower face of the receptacle. The shoulder defines the position of the receptacle in the installed state. Further, the shoulder facilitates sealing the receptacle against the support body, in order to prevent water containing debris from bypassing between the receptacle and the filter element.

The support body may have flow openings (flow windows) arranged below the shoulder. The flow openings allow filtered water from the radial inside of the filter medium body to be discharged towards an outlet. The flow openings may in particular be provided between the shoulder and the end plate.

Preferably, the receptacle is detachable from the filter element. This allows the receptacle to be removed from the filter element for cleaning.

The receptacle may be slidable along the filter element, preferably with an inner edge of the receptacle abutting the filter element. An intuitive sliding motion can be applied without tools for disassembly and assembly. Further, the inner edge of the receptacle sliding along the filter element scrapes debris from the filter medium body during disassembly. Thus, thorough cleaning is achieved with few, simple manipulations. Preferably, the inner edge is provided at a lower face of the receptacle, which lower face may sealingly abut a shoulder of the support body in the mounted state.

The housing may have an inwardly protruding rim for sealing abutment of an upper edge of an outer wall of the receptacle. This prevents water containing debris from bypassing between the housing and the receptacle. Further, the rim provides an upper stop for the receptacle. In particular, the receptacle may be clamped between the rim of the housing and the shoulder of the support body in the assembled state. Thus, mispositioning of the receptacle is reliably prevented.

The rotor may have a shaft, which protrudes through an upper end wall of the housing. Preferably, the shaft is rotatably mounted at the upper end wall. A standard bearing or bushing may be employed with this design. Further, the protruding shaft facilitates attachment of a motor for driving the rotor.

The filter assembly may further comprise a motor, in particular an electric motor, for rotating the rotor. Preferably, the motor is attached to the protruding shaft of the rotor. The motor allows driving the rotor independently of a pump of the washing machine. In other words, a certain rotational speed of the rotor may be obtained, irrespective of the water flow rate through the washing machine.

At least one of the blades of the rotor may have a tapered cross section. Preferably, a radial width of the blade decreases in circumferential direction over at least half of the circumferential extension of the blade. In particular, the blade may be provided with an airfoil profile. The tapered cross section of the rotating blade creates varying pressure and/or flow directions traveling around the filter medium body, when the rotor rotates. In other words, waves may be created in the water. For instance, a radially inward flow pattern may establish at a front edge of the blade, while a radially outward flow pattern establishes at a rear edge of the blade. This contributes to prevent clogging of the filter medium body and to remove fibers or particles from the filter medium body.

At least one of the blades of the rotor may have a cross section of constant radial width. This design may save manufacturing costs.

Preferably, blades of different cross sections are provided at the rotor. Thus, different flow patterns arise, which may result in particular efficient cleaning and clogging prevention for the filter element during regular use.

The rotor may comprise a flange with at least one axially inclined rib. Preferably, several inclined ribs are provided at the flange. The flange is generally arranged adjacent to the receptacle in the assembled state. Upon rotation of the rotor, the at least one inclined rib, which may also be referred to as a sloping edge, pushes the water downward into the receptacle. In other words, the flange with the at least one inclined rib acts as an axial fan.

The inclined rib(s) preferably protrude radially outwardly at the flange. Thus, a downward flow pattern is established in particular adjacent to a circumferential housing wall, where heavier particles accumulate due to centrifugal forces.

The invention also relates to the use of a filter assembly according to the invention, as described above, for filtering effluent of a washing machine. Thereby, the ecological impact of operating the washing machine may be reduced.

The invention further relates to a washing machine comprising a filter assembly according to the invention, as described above. During operation of the washing machine, less particles, such as microplastics, are fed into a sewage system. The washing machine typically comprises a water inlet for receiving clean water, a washing drum, and a water outlet for discharging wastewater. Preferably, the filter assembly is fluidically arranged between the washing drum and the water outlet. In other words, effluent of the washing drum is directed through the filter assembly prior to being dischargeed via the water outlet.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a washing machine according to the invention comprising a filter assembly according to the invention, in a schematic sketch;
- Fig. 2: shows a filter assembly according to the invention, in a schematic perspective view;
- Fig. 3: shows the filter assembly from Fig. 2 in a schematic longitudinal section;
- Fig. 4: shows the filter assembly from Fig. 2 with a filter element and a receptacle removed from a housing, in a schematic partly sectional view;
- Fig. 5: shows the filter element of the filter assembly from Fig. 2, while the receptacle is being removed, in a schematic perspective view;
- Fig. 6: shows a rotor of the filter assembly from Fig. 2, in a schematic perspective view;
- Fig. 7: shows the rotor from Fig. 6 in a schematic sectional view.

### Detailed description

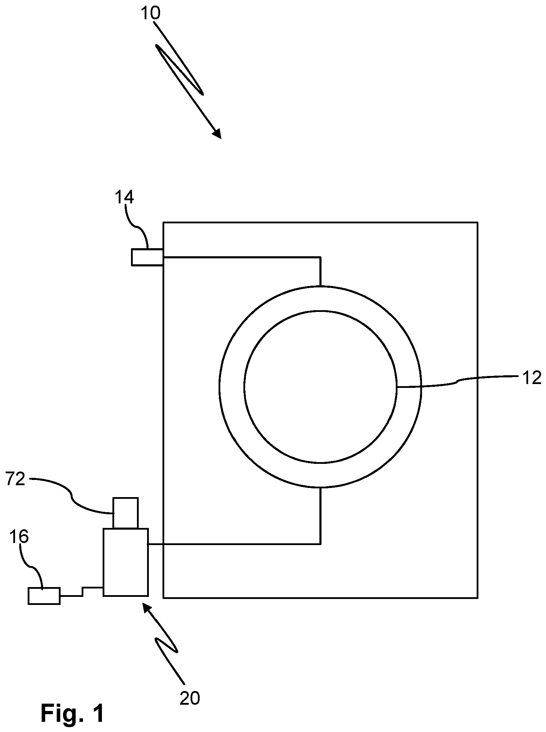

**Figure 1** shows a washing machine **10.** The washing machine 10 comprises a rotatable drum **12** for receiving clothing or the like to be washed. Fresh water is fed into the drum 12 via a water inlet **14** of the washing machine 10. Wastewater (effluent) from the drum 12 is discharged into a sewage system (not depicted) via a water outlet **16** of the washing machine 10. Fluidically between the drum 12 and the water outlet 16 a filter assembly **20** is arranged. The filter assembly 20 may be arranged outside of the washing machine 10, as depicted in Figure 1, or may be arranged within a housing of the washing machine 10 (not depicted). The filter assembly 20 prevents debris, which may contain microplastics, from being fed into the sewage system.

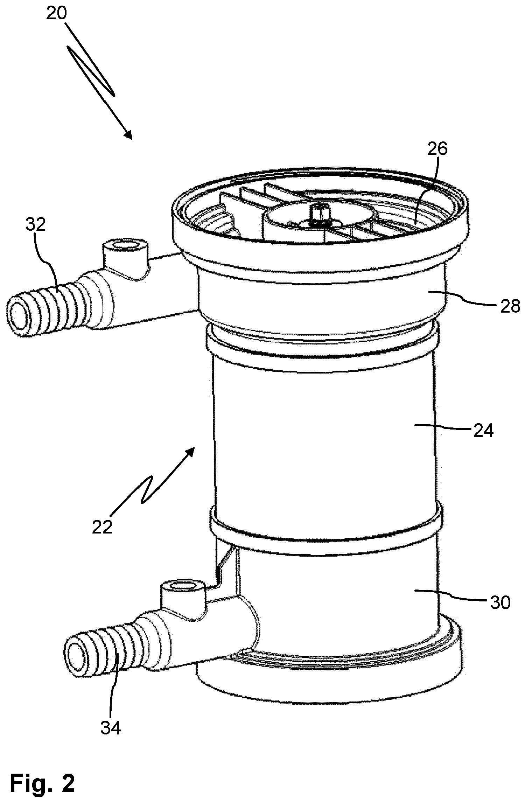

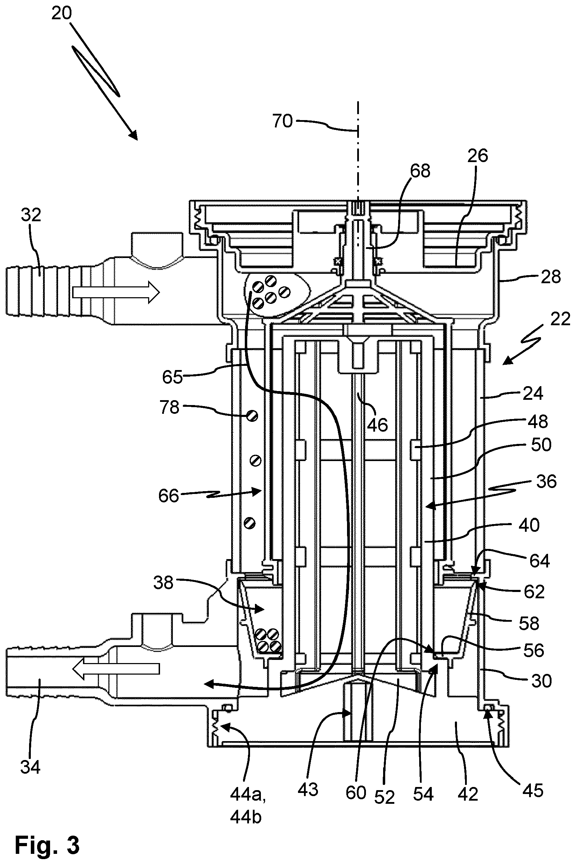

**Figures 2** and **3** show the filter assembly 20 of the washing machine 10. The filter assembly 20 comprises a housing **22,** which has a cylindrical circumferential wall **24.** In the depicted embodument, an upper end wall **26** of the housing 22 is screwed into an upper housing part **28,** which in turn is connected to an upper end of the circumferential wall 24. A lower housing part **30** is connected to a lower end of the circumferential wall 24. An inlet **32** of the filter assembly 20 is formed at the upper housing part 24. The inlet 32 directs fluid flow tangentially into the housing 22. Advantageously, an initial centrifugal force of the wastewater is generated. The wastewater may rotate at least partially around and outside the filter medium body 50 under the initial centrifugal force. The initial centrifugal force is supplemented by the rotation of the rotor 66 described further below. An outlet **34** of the filter assembly 20 is formed at the lower housing part 30.

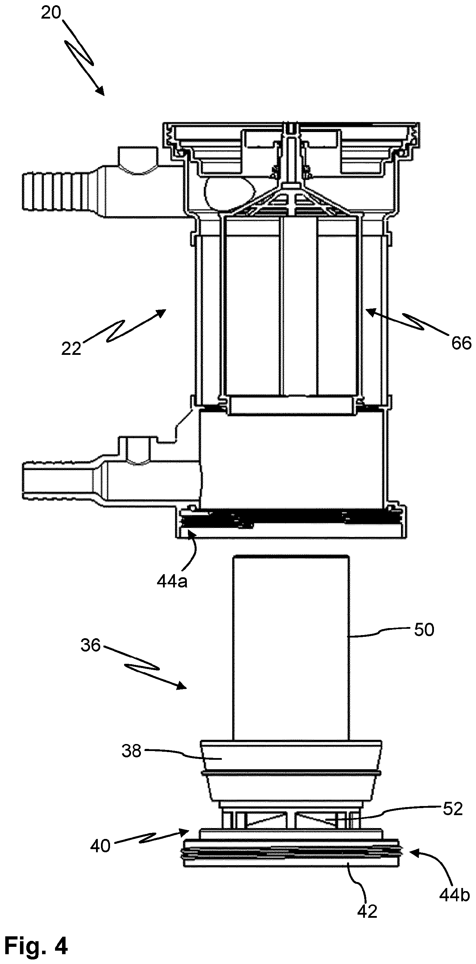

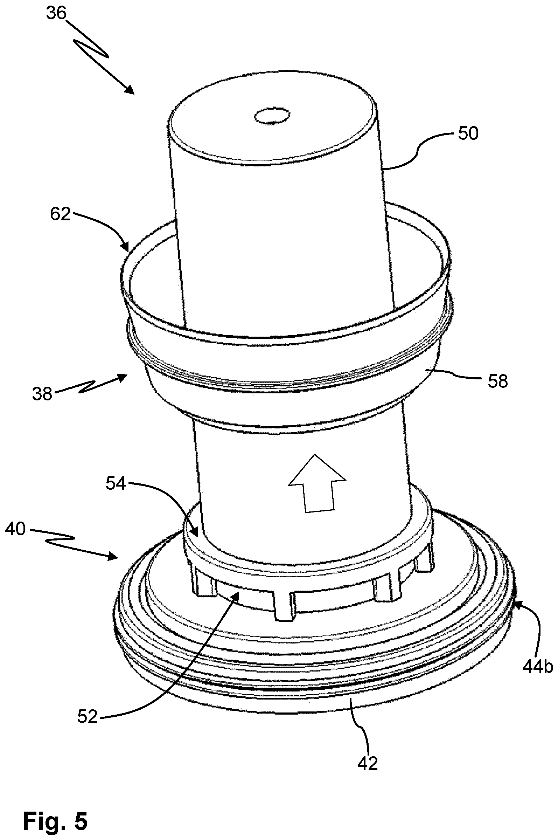

A filter element **36** and a receptacle **38** are detachably mounted in the housing 22, see also **Figure 4****.** The receptacle 38 is detachably arranged on the filter element 36, see also **Figure 5****.**

The filter element 36 comprises a support body **40,** cf. in particular Figure 3. The support body 40 has an end plate **42,** which in the assembled state closes the housing 22 at its lower end. The end plate 42 and the lower housing part 30 comprise mating threads **44a, 44b** to establish a detachable connection. A seal element **45** may be arranged between the end plate 42 and the lower housing part 30. The end plate 42 may be provided with a tool interface **43** or with a grip (not depicted) for toolfree disassembly and assembly.

A grid section of the support body 40 axially projects from the end plate 42 into the housing 22. The grid section compises longitudinal and circumferential ribs **46, 48.** A cylindrical filter medium body **50** made from filter mesh encompasses the grid section.

Between the grid section and the end plate 42 of the support body 40, flow openings **52** are formed. Through the flow openings 52 a fluid connection between the clean side, i.e. the radially inner volume of the filter medium body 50 and the outlet 34 is established.

A circumferential shoulder **54** is formed between the flow openings 52 and the grid section. In the assembled state, the receptacle 38 rests on the shoulder 54.

The receptacle 38 is rotationally symmetric and comprises a lower face **56** and a outer wall **58,** which projects from the lower face 56 and expands upwardly.

The lower face 56 of the receptacle 38 sealingly abuts the support body 40. In particular, an inner edge **60** of the lower face 56 closely fits around the support body 40 and the filter medium body 50. When the receptacle 38 is being removed from the filter element 36 during maintenance, cf. Figure 5, the inner edge 60 scrapes particles and fibers from the filter medium body 50. These residues are automatically collected in the receptacle 38, while it is slid along the filter medium body 50.

In the assembled state, an upper edge **62** of the outer wall 58 sealingly abuts an inwardly projecting rim **64** of the housing 22.

Thus, by its contact with the housing 22 and the support body 40, the receptacle 38 prevents direct fluid flow from the inlet 32 to the outlet 34. Rather, the water is forced to pass through the filter medium body 50, which prevents fibres, particles and in particular microplastics from passing through. This flow path is indicated in Figure 3 by an arrow **65.**

The filter assembly 20 further comprises a rotor **66.** The rotor 66 is mounted inside the housing 22 and engages around the filter medium body 50. A shaft **68** of the rotor 66 projects through the upper end wall 26 of the housing 22. Seals and bearings or bushings may be provided between the shaft 68 and the upper end wall 26. An axis of rotation of the rotor 66 conicides with an axis of the cylindrical filter medium body; the common axis is labeled with numeral **70.** A motor **72** for rotating the rotor 66 may be attached to the free end of the shaft 68, cf. Figure 1.

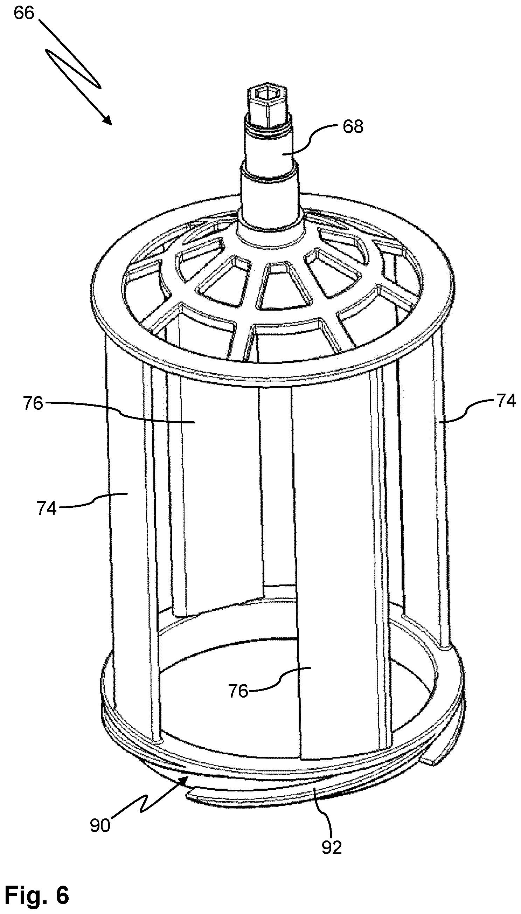

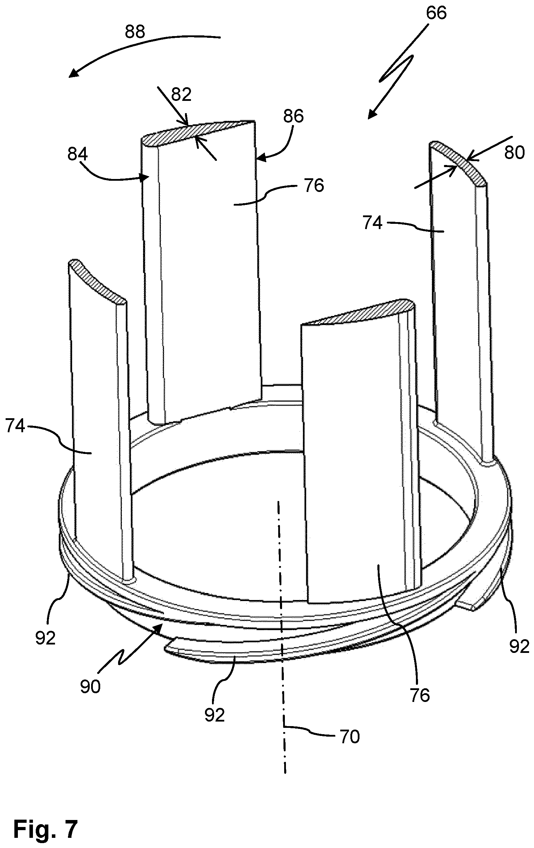

The rotor 66 serves to assist in separating particles from the wastewater, which is received via the inlet 32. Further, the rotor 66 serves to prevent the filter medium body from clogging. The rotor 66 comprises several blades **74, 76** extending along the filter medium body 50, see in particular **Figures 6** and **7****.** In this embodiment, the blades 74, 76 extend parallel to axis 70.

During operation, the rotating blades 74, 76 make the water outside the filter medium body 50 rotate around axis 70. This causes especially heavier particles **78** to travel towards the circumferential wall 24, where they sink into the receptacle 38, cf. Figure 3. Note that the size of the particles 78 is exaggerated in Figure 3.

In the depicted embodiment, two blades 74 have a constant radial width **80,** cf. Figur 7.

Two blades 76 have a tapered cross section, which may resembes an airfoil. A radial widht **82** of the blades 76 decreases from their front edges **84** towards their rear edges **86.** An arrow indicates the direction of rotation **88** of the rotor 66.

At the front edges 84 of the blades 76, the rotation of the rotor 66 supports an inward flow of water through the filter medium body 50. At the rear edges 86, the rotation of the rotor 66 may cause a local reversal of the flow pattern, i.e. water may be sucked back outwardly. By this local backflush, particles and fibers that may be stuck in the filter medium body can be freed, so they can sink into the receptacle 38.

At the lower end of the rotor 66 a circumferential flange **90** is provided. The blades 74, 76 are each connected to the flange 90. The flange has outwardly projecting ribs **92** (which may als be referred to as blades), which are inclined against the axis 70. When the rotor 66 rotates, the axially inclined ribs 92 push water and debris into the receptacle 38. Since the receptacle 38 is open towards the filter medium body 50, water may pass from the receptacle 66 through the filter medium body 50, while debris is kept in the receptacle 38.

In summary, the invention refers to a rotor assisted filter for filtering effluent of a washing machine. Rotation of the rotor supports centrifugal separation of especially heavier particles and fibres. A filter element engages into the rotor, in particular between axially extending blades of the rotor. The filter element may separate microplastics from the effluent. A receptacle surrounds the filter element. Fibres, particles and microplastics are collected in the receptacle. For cleaning, the filter element and the receptacle can be removed from a filter housing. Preferably, the receptacle is detachable from the filter element. Sliding the receptacle along the filter element may wipe debris from the filter element.

### List of Reference Signs

Washing machine **10**
Drum **12**
Water inlet **14**
Water outlet **16**
Filter assembly **20**
Housing **22**
Circumferential wall **24**
Upper end wall **26**
Upper housing part **28**
Lower housing part **30**
Inlet **32**
Outlet **34**
Filter element **36**
Receptacle **38**
Support body **40**
End plate **42**
Threads **44a, 44b**
Seal element **45**
Longitudinal ribs **46**
Circumferential ribs **48**
Filter medium body **50**
Flow openings **52**
Shoulder **54**
Lower face **56**
Outer wall **58**
Inner edge **60**
Upper edge **62**
Rim **64**
Arrow **65**
Rotor **66**
Shaft **68**
Axis **70**
Motor **72**
Blades **74, 76**
Particles **78**
Radial width **80, 82**
Front edge **84**
Rear edge **86**
Direction of rotation **88**
Flange **90**
Inclined ribs **92**

## Claims

1. Filter assembly (20), for filtering effluent of a washing machine, the filter assembly (20) comprising
- a housing (22);
- a filter element (36) having a cylindrical filter medium body (50), in particular a filter mesh;
- a rotor (66), rotatably mounted inside the housing and comprising at least one blade (74, 76) extending along the filter medium body (50); and
- a receptacle (38), located at a bottom end of said filter element;
wherein the filter element (36) and the receptacle (38) are detachably arranged inside the housing.

2. Filter assembly (20) according to claim 1, wherein the filter element (36) comprises a support body (40), around which the filter medium body (50) engages, preferably wherein the support body (40) comprises longitudinal and circumferential ribs (46, 48).

3. Filter assembly (20) according to claim 2, wherein the support body (40) comprises an end plate (42), which seals the housing (22) in the assembled state, preferably wherein the end plate (42) and the housing comprise mating threads (44a, 44b).

4. Filter assembly (20) according to claim 2 or 3, wherein the support body (40) has a shoulder (54) for sealing abutment of the receptacle (38), preferably of a lower face (56) of the receptacle (38).

5. Filter assembly (20) according to claim 4, wherein the support body (40) comprises flow openings (52) arranged below the shoulder (54).

6. Filter assembly (20) according to one of the preceding claims, wherein the receptacle (38) is detachable from the filter element (36).

7. Filter assembly (20) according to claim 6, wherein receptacle (38) is slidable along the filter element (36), preferably with an inner edge (60) of the receptacle (38) abutting the filter element (36).

8. Filter assembly (20) according to one of the preceding claims, wherein the housing (22) has an inwardly protruding rim (64) for sealing abutment of an upper edge (62) of an outer wall (58) of the receptacle (38).

9. Filter assembly (20) according to one of the preceding claims, wherein the rotor (66) has a shaft (68), which protrudes through an upper end wall (26) of the housing (22).

10. Filter assembly (20) according to one of the preceding claims, further comprising a motor (72), in particular an electric motor, for rotating the rotor (66), preferably wherein the motor (72) is attached to a protruding shaft (68) of the rotor (66).

11. Filter assembly (20) according to one of the preceding claims, wherein at least one of the blades (76) has a tapered cross section, preferably wherein a radial width (82) decreases in circumferential direction over at least half of the circumferential extension of the blade (76).

12. Filter assembly (20) according to one of the preceding claims, wherein at least one of the blades (74) has a cross section of constant radial width (80).

13. Filter assembly (20) according to one of the preceding claims, wherein the rotor (66) comprises a flange (90) with at least one axially inclined rib (92).

14. Use of a filter assembly (20) according to any one of claims 1 to 13 for filtering effluent of a washing machine (10).

15. Washing machine (10) comprising a filter assembly (20) according to any one of claims 1 to 13.
